(19) Europäisches Patentamt
European Patent Office
Office européen des brevets

(11) **EP 2 075 629 B1**

(12) **EUROPEAN PATENT SPECIFICATION**

(45) Date of publication and mention
of the grant of the patent:
**22.05.2013 Bulletin 2013/21**

(51) Int Cl.:
***G02F 1/39*** (2006.01)

(21) Application number: **08172972.5**

(22) Date of filing: **29.12.2008**

(54) **Optical parametric generator**

Optischer parametrischer Generator

Générateur paramétrique optique

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **29.12.2007 LT 2007085**

(43) Date of publication of application:
**01.07.2009 Bulletin 2009/27**

(73) Proprietor: **UAB "Ekspla"**
**02300 Vilnius (LT)**

(72) Inventors:
• **Balickas, Stanislovas**
**08210 Vilnius (LT)**
• **Antanavicius, Romaldas**
**14167 Vilnius (LT)**
• **Michailovas, Andrejus**
**06325 Vilnius (LT)**

(74) Representative: **Draugeliene, Virgina Adolfina Tarpine Ltd**
**A. P. Kavoliuko g. 24-152**
**04328 Vilnius (LT)**

(56) References cited:
**US-B1- 6 647 033**

• **SINGH I ET AL: "DESIGN OF A HIGH-POWER ND: YAG Q-SWITCHED LASER CAVITY" APPLIED OPTICS, OSA, OPTICAL SOCIETY OF AMERICA, WASHINGTON, DC, vol. 34, no. 18, 20 June 1995 (1995-06-20), pages 3349-3351, XP000508506 ISSN: 0003-6935**
• **MES J ET AL: "Travelling-wave nanosecond optical parametric oscillator close to the Fourier-transform limit" OPTICS COMMUNICATIONS, NORTH-HOLLAND PUBLISHING CO. AMSTERDAM, NL, vol. 196, no. 1-6, 1 September 2001 (2001-09-01), pages 229-235, XP004300751 ISSN: 0030-4018**

**Description**

This invention relates to the field of lasers and more specifically the optical parametric generators, which use image rotation to improve beam quality and ensure high polarization purity.

There is known a laser resonator, which uses an image rotating retroreflector and means for retaining linear polarization, comprising several total internal reflection planes disposed to the beam and polarization rotators, e.g. Faraday rotators, used to control the polarization and prevent the transformation of a linear polarization to an elliptical in the reflection (European patent No 1662623).

A drawback of the known resonator with an image rotating retroreflector lies in the fact that it requires an additional operation for polarization control, which is achieved by means of polarization rotators characterized by a strong dispersion of a polarization rotation (the polarization rotation angle depends on the radiation wavelength). Therefore such retroreflectors maintain the linear polarization only in a limited wavelength range. Moreover, a Faraday rotator has particular absorption bands in UV and visible light ranges. Therefore the said retroreflector is not an optimal choice for the OPG.

From the technical point, the most similar to our OPG is an optical parametric generator, comprising a resonator, a nonlinear crystal and at least one $\lambda/2$ wave retardation plate, both placed between the laser cavity mirrors, the means to direct the pump beam into the said resonator and the means for directing the signal and the idler waves out of the said resonator. The said OPG has end mirrors made as Porro prisms rotating the beam's profile at 90° angle after it completes a full round-trip through the resonator. The half-wave retardation plate prevents the beam polarization from turning into an elliptical polarization during the process of image rotation and keeps its orientation constant (US patent No 6647033).

A drawback of this OPG is a narrow wavelength range, wherein a beam quality can be enhanced, while at the same time preserving its linear polarization with the unchanging orientation. With the help of a retardation plate it is not possible to reach the identical polarization rotation in a wide spectral range. Therefore the said OPG does not warrant pure polarization state of the radiation over the entire tuning range. Moreover, the said generator does not ensure pure polarization state of an idler wave, unless its wavelength is similar to the wavelength of the signal wave.

The aim of the present invention is to improve the beam quality (to symmetrize the beam divergence and homogenize the intensity distribution) of the optical parametrical generator and to ensure unchanging linear polarization in the wide spectral range as defined in claims 1-7.

According to the invention, the optical parametrical generator comprises an optical resonator formed by two mirrors, the mean to direct the pump beam into the resonator and nonlinear crystal located between the said mirrors, and the means for directing the signal and the idler waves out from the resonator, wherein the said optical resonator interchanges the vertical and the horizontal axes of the beam profile during the full round-trip, while preserving the linear polarization of the beam. One end mirror of the said resonator is a multifunctional retroreflector, which reflects back the beam of the parametrical generator and performs the interchange of the vertical and the horizontal axes of the beam profile (rotates the cross-sectional view of the beam by 90°) and at same time ensures the invariable direction of the linear polarization

The use of a multifunctional retroreflector in the OPG improves the beam quality by symmetrizing the beam divergence, homogenizing the distribution of intensity, at the same time because the invariable linear polarization direction is ensured in the wide spectral range and ensures high purity of the linear polarization over the entire tuning range of the generator. As a result, both the signal and the idler waves, generated during the parametric interaction, possess high beam quality and pure linear polarization.

The multifunctional retroreflector of the resonator is an element made from the transparent material, comprising at least four planes of total internal reflection, which are arranged in space in such a way, that the incident light beam after each reflection not only rotates its cross-sectional profile, but possesses a phase shift between the perpendicular (*s*) and the parallel (*p*) components of the polarization. The vertical and the horizontal axes of the reflected beam profile interchange after the last reflection. The said total phase shift ensuress that the beam linear polarization has a direction, which coincides with the initial direction of the polarization.

The retroreflector used in the proposed OPG exploits a property of the total internal reflection, i.e. the phase shift between *s* and *p* components. The linear state of the polarization is not preserved inside the retroreflector but it becomes linear again after leaving the retroreflector and its orientation coincides with the initial polarization state. The retroreflector of this invention fulfills the function of the combination of a Porro prism at 45° angle and $\lambda/2$ phase retardation plate of the prior art.

The advantage of the said OPG with the said multifunctional retroreflector, which comprises at least four total internal reflection planes arranged in space, lies in the fact that the control of the beam's profile and the polarization depends only on the refractive index of the transparent material from which the retroreflector is made. It is simple to choose the transparent material, which ensures the invariable linear polarization over the wide spectral range. When we use the material with the small refractive index dispersion, depolarization losses over the wide spectral range are lower than the depolarization losses of the retroreflector constructed from a Porro prism and a retardation plate. As a result, using the said retroreflector in the OPG resonator lets improve the beam quality of the said generator, maintain high efficiency of the parametric interaction and the polarization purity of an output beam over the total tuning range.

The multifunctional end retroreflector of the OPG resonator is made from two right-angled prisms, which are rotated in respect to each other and the incident beam's linear polarization vector so that the incident beam experiences four total internal reflections during the propagation through the pair of prisms. The technological implementation of the double right-angle prism retroreflector is very simple. Any supplier of optical elements can manufacture such a pair of prisms. In another possible implementation the prisms are made from different transparent materials.

The multifunctional end retroreflector of the OPG resonator is made as a monolithic optical element in which the incident beam experiences at least four total internal reflections. The monolithic element has better mechanical stability and lower energy losses, but it is more complicated to manufacture than the pair of prisms.

Another end mirror of the OPG resonator is a flat mirror, which in combination with the multifunctional retroreflector inverts the beam profile in respect to a diagonal during the full round-trip of the resonator (i.e. two mutually perpendicular components of the beam profile get interchanged).

Another end mirror of the OPG resonator is an image rotating prism, e.g. a Porro prism, which, during each round-trip of the resonator, in combination with the multifunctional retroreflector inverts the beam's profile at 90° angle.

The details of the invention are illustrated in the figures:

Fig.1 - an optical layout of the proposed optical parametric generator.
Fig.2 - an illustrative explanation of the influence of the OPG, presented in Fig.1, on the beam properties.
Fig.3 - another version of the optical parametric generator.
Fig.4 - an illustrative explanation of the influence of the OPG, presented in Fig.3, on the beam properties.
Fig.5 - an optical layout of the multifunctional retroreflector showing single beam trajectory and marked positions in which the changes of the beam's profile are observed.
Fig.6 - an illustration of beam profiles propagating through the multifunctional retroreflector at the positions according to Fig.5.
Fig.7 - an optical layout of the multifunctional retroreflector, showing the single beam path with marked positions of the beam polarization variations.
Fig.8 - illustrations of the beam polarization while propagating through the multifunctional retroreflector at the positions according to Fig.7.

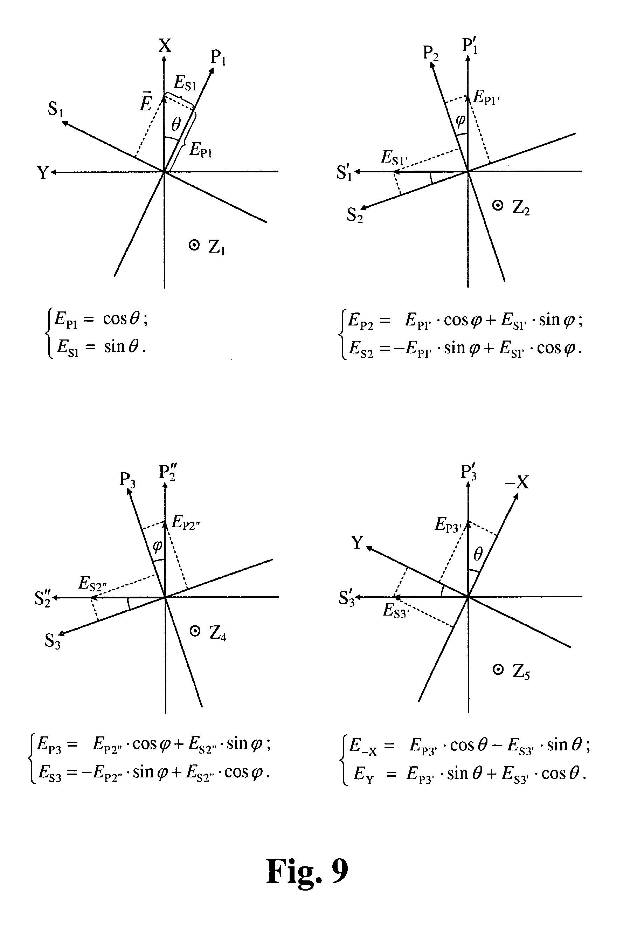

Fig.9 - a mutual orientation of the coordinate systems and the polarization components amplitude relationships.
Fig.10 - the dependence of an angle $\Theta$ on the refractive index of the proposed reflector material.
Fig.11 - the dependence on wavelength of the depolarization losses inside the resonator with the proposed multifunctional retroreflector.

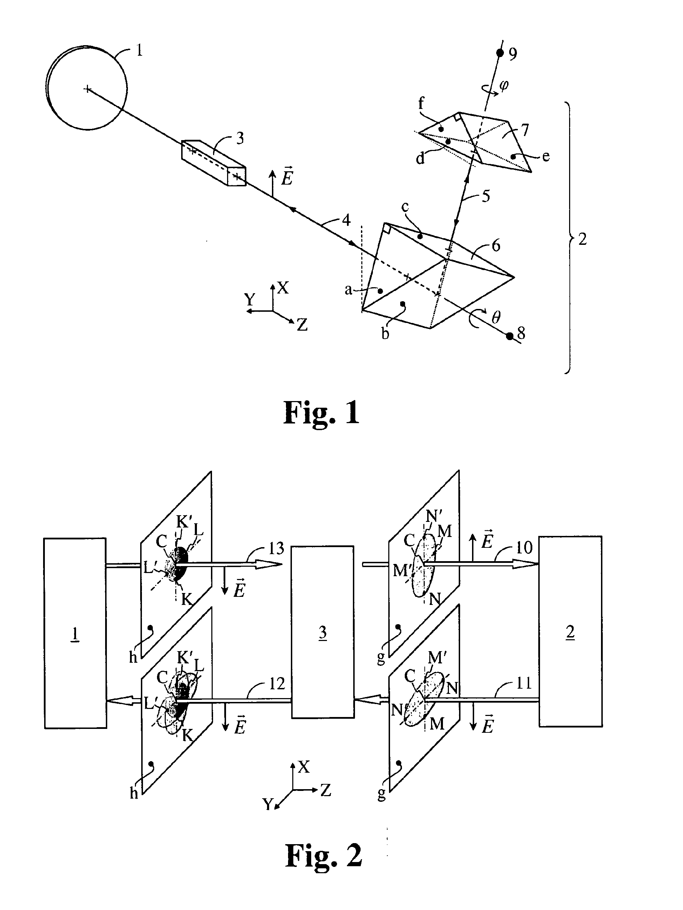

The proposed optical parametric generator as shown in Fig.1 has a resonator comprising two end mirrors, one of which is a flat mirror (1) and the second is a multifunctional retroreflector (2). A nonlinear crystal (3) is placed between those end mirrors. The OPG also has the mean to direct the pump beam into the resonator and the means to direct the signal and the idler waves out from the resonator (not shown).

In case the first end mirror is a flat mirror (1) it can perform like the means to transmit the pump beam, as well as for the signal and the idler waves out coupling (the mirror totally transmits the pump wave and partially transmits the signal and the idler waves). When all three waves propagate following one and the same path (4, 5), the collinear parametric interaction takes place in the nonlinear crystal (3).

The multifunctional retro-reflector (2) is made from two total internal reflection prisms (6, 7), e.g. right-angled prisms. The prism (6) is orientated in such a way that the incident beam of the resonant wave (4) (e.g. signal wave), when reflected from its plane **b,** changes the propagation direction by 90° angle and is directed to the second prism (7), i.e. the total internal reflection plane **b** produces a 45° angle with the direction of the incident beam. The prism (7) is orientated in such a way that the incident beam of the resonant wave (5), when reflected from the planes **e** and **f,** changes the direction of the propagation at 180° angle, i.e. the reflection planes **e** and **f** produce 45° angle with the direction of the incident beam (5) (right-angled prism, orientated in such a way, is called a Porro prism). Other prism planes **a**, **c, d,** through which passes the beam, do not influence neither the propagation direction nor the beam's profile nor the polarization, therefore they will not be considered further.

The prisms (6) and (7) are azimuthally rotated at the angles $\Theta$ and $\varphi$ in relation to the direction of the beam propagation (4, 5). $\Theta$ is an angle between the polarization vector of the incident beam and the axis of the first prism $p$ (6), $\varphi$ is an angle between both $p$ axes of the retroreflector. The angle $\Theta$ is positive if the first prism (6) of the retroreflector is rotated clockwise looking from the point (8); the angle $\varphi$ is positive if the second prism (7) of the retroreflector is rotated clockwise if observed from the point (9). The angle $\Theta$ is positive and the angle $\varphi$ is negative as shown in Fig.1. The particular values of the angles $\Theta$ and $\varphi$ depend on the refractive index of the prisms.

The invention is not restricted only to the realization of the reflector according to Fig.1. In the general case, the first prism can be not only a right-angle prism. Then the directions of the beam propagation (4) and (5) produce internal angle 2α, where α is an angle of the incidence to the plane **b.** The planes **a** and **c** will nevertheless be perpendicular to the direction of the beam propagation. Moreover, the retroreflector (2) can be made as a single monolithic element. Then the mechanical stability is improved and the reflection losses are minimized due to the elimination of the surfaces **c** and **d.**

Fig.2 illustrates how the beam's profile and the polarization are affected during one full round-trip of the OPG according to the resonator presented in Fig. 1. When the beam starts after nonlinear crystal (3), the round-trip includes the following segments:

(10) - a beam path from the nonlinear crystal (3) to the retroreflector (2);
(11) - a beam path from the retroreflector (2) to the nonlinear crystal (3);
(12) - a beam path from the nonlinear crystal (3) to the flat mirror (1);
(13) - a beam path from the flat mirror (1) to the nonlinear crystal (3).

The nonlinear crystal of the OPG generates the beam of a signal wave with an asymmetric profile. Suppose the beam profile is elliptical in shape in a plane g, which is perpendicular to the direction of the beam propagation, i.e. points M and N are of the same intensity but they lie at different distances from the centre of the beam (C) on two perpendicular axes. The polarization of the beam (10) incident on the retroreflector is linear with direction coinciding the direction of X axis and coincides with the long axis NN' of the beam profile. After the reflection from the retroreflector (2), the long (NN') and the short (MM') axes of the profile of the back reflected beam (11) get interchanged, whereas the orientation of the linear polarization vector remains unchanged. The polarization vector of the returning beam (11) preserves the direction, which coincides with the X axis, that means that the retroreflector (2) shifts the phase by π. After the parametrical interaction in the nonlinear crystal (3), the returning beam (12) could be presented as the sum of two beams, one beam coming from the retroreflector (2) and another one being the amplified signal wave. The long axes of the profiles of these two beams are criss-crossed after passing through the nonlinear crystal (3). As a result, the beam profile (in the plane **h** perpendicular to the direction of the beam propagation) is characterized by having better symmetry: two perpendicular axes KK' and LL' in the beam profile are approximately of the same length. The orientation of the beam polarization vector remains unchanged. Neither beam profile nor the polarization is influenced during the reflection from the flat mirror (1). Therefore the beam has a better quality at the end of the round-trip of the OPG resonator compared to the one at the beginning (10). After completing many resonator round-trips, the OPG beam has a circular symmetry and high polarization purity.

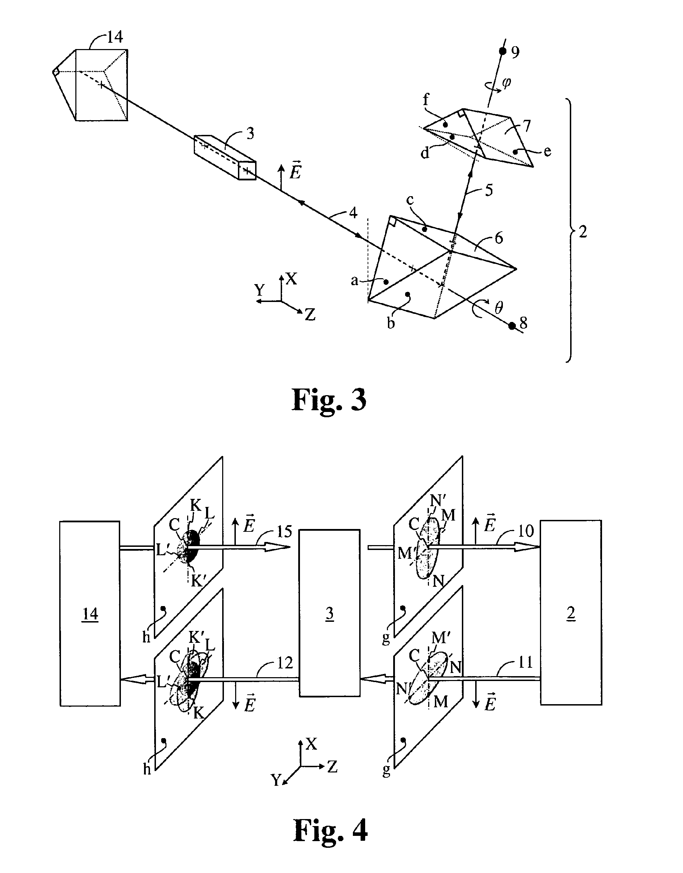

Fig.3 illustrates another version of the OPG, where the first end mirror of the resonator is a Porro prism (14). In this case, it is necessary to use an additional optical element (not shown in the drawing) to direct the pump beam and the signal and the idler coupling waves out from the resonator. The Porro prism (14) alters the orientation of the beam's profile during one full round-trip of the resonator (see Fig.4), when it is used as the end mirror of the OPG resonator. When the OPG's nonlinear crystal generates a symmetric beam, for example having one symmetry axis (e.g. the vertical axis), then it is not important whether the vertical and the horizontal axes of the beam profile get interchanged (as in Fig.2) after each full round-trip of the resonator the beam's profile gets inverted (as in Fig.4). If the nonlinear crystal generates a nonsymmetrical beam, the design of the OPG resonator according to Fig.3 is preferred.

The proposed OPG exploits the property of the total internal reflection of the multifunctional retroreflector (2). The principle of operation of the proposed retroreflector is based on the incident beam's profile and polarization changes during the total internal reflections. Fig.1 and Fig.3 illustrate the single beam propagating in the directions (4) and (5). As the real beam features the transverse dimensions, one could present it as a multiple of beams traversing the resonator following different trajectories.

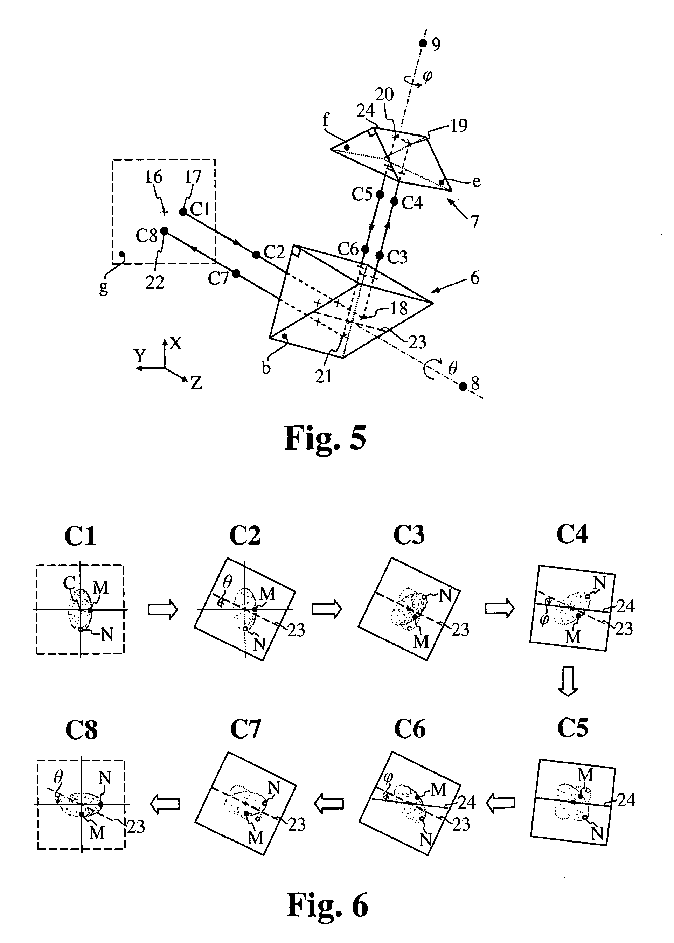

Fig.5 shows a single non-axial beam trajectory (16) during a single transit through the retroreflector. The trajectory is presented as consisting of segments between the initial point (17) in the reference plane **g,** reflections points (18, 19, 20, 21) in the retroreflector planes **b, e, f** and the end point (22) in the reference plane **g.** The positions C1-C8 on the trajectory are marked for tracing the changes of the beam's profile: C1, C2 - before the retro-reflector, i.e. before the first reflection, C3, C4 - after the first reflection, C5, C6 - after the second and the third reflections, C7, C8 - after the fourth reflection, i.e. after the retroreflector. The beam's profile is observed from the point (8) at the positions C1, C2, C7, and C8 and from the point (9) - at the positions C3-C6. Also the two important lines are marked on Fig.5: the centre-line (23) of the plane **b** of the first retroreflector prism (6) and the edge (24) of the second retroreflector prism (7). It is well known that the right-angled prism inverts the image with respect to the centre-line of the reflection plane, and the Porro prism inverts the image with respect to the edge.

Trace, how the asymmetrical beam profile is rotated and how the transverse positions of the reference beam profile points M and N vary, when the beam propagates through the retroreflector. Suppose the short axis of the beam profile is horizontal and the long axis is vertical at the initial reference position (Fig.6, C1), i.e. in the reference plane g before the retroreflector. The point M is on the right side from the centre of the beam C (in Fig.5 it corresponds to the point (17)), the point N is below the center C on the long axis of the beam profile. In the coordinate system, which is associated with the first retroreflector prism (6) (position C2) rotated at an angle [-Θ], the short axis of the beam profile is rotated at an angle Θ in respect to the centre-line (23). After the first reflection (position C3), the image is turned up and the short axis of the beam profile rotates at an angle [+Θ] in respect to the center line (23). At the position C4 we transit to the coordinate system associated with the second prism (7) (Fig.5.): the edge of the second prism (24) is rotated at an angle φ in respect to the centre-line (23) of the first prism, and the short axis of the beam profile makes a +45° angle with the edge of the second prism (24). After the second and the third reflections, the image rotates (position C5) in such a way that the short axis makes a -45° angle with the edge of the second prism (24). At the position C6 we transit back to the coordinate system associated with the first prism (6): the short axis of the beam profile gets rotated at [- (90° - Θ)] angle in respect to the centre-line (23) of the first prism. After the fourth reflection (position C7) the short axis of the beam profile rotates at [+ (90° - Θ)] angle in respect to the centre-line (23). At the position C8 we are back to the laboratory coordinates associated with the OPG nonlinear crystal: the short axis of the beam profile becomes the vertical axis and the long axis becomes the horizontal axis; the point M goes to the bottom of the beam profile (in Fig.5 it corresponds to the point (22), and the point N goes to the right of the beam profile. The distances from the centre of the beam are preserved. After the comparison of beam profiles in positions C1 and C8 we can state, that the proposed retroreflector interchanges the vertical and the horizontal axes of the beam profile. Therefore the retroreflector of this invention performs the same rotation operation of the beam profile, as the Porro prism rotated by 45°, described in the prior art. Fig.5 and Fig.6 illustrate the retroreflector, when Θ = +26°, and φ = -19°. In a more general case, the retroreflector with 4 reflections interchanges the vertical and the horizontal axes of the incident beam profile, if the following condition is satisfied :

$$\Theta - \varphi = \pm 45°; \pm 135°; \pm 225°; \quad (1)$$

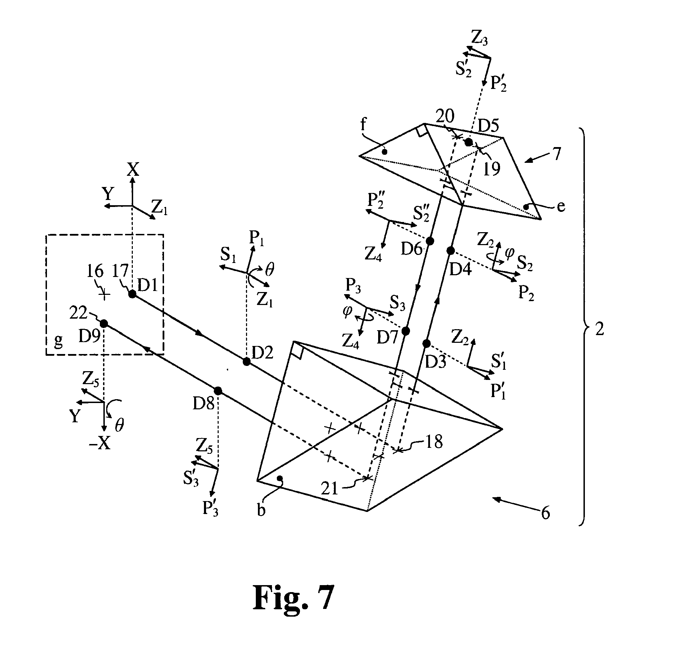

The present invention's OPG according to Fig.1, Fig.3 or Fig.5 uses the retroreflector, which at the same time modifies not only spatial properties of the generated beam, but also the polarization properties of the generated beam. In Fig.7 the trajectory of the same beam (17-22) is shown as it propagates through the retroreflector and the positions D1-D9 mark the points, where the changes of the beam polarization will be observed. Also, several coordinate systems are drawn, where the polarization changes will be observed: $XYZ_1$ and $-XYZ_5$ are the laboratory coordinate systems, $P_1S_1Z_1$, $P_1'S_1'Z_2$, $P_3S_3Z_4$ and $P_3'S_3'Z_5$ are the coordinate systems associated with the first prism (6) of the retroreflector, and $P_2S_2Z_2$, $P_2'S_2'Z_3$ and $P_2''S_2''Z_4$ are the coordinate systems associated with the second prism (7) of the retroreflector.

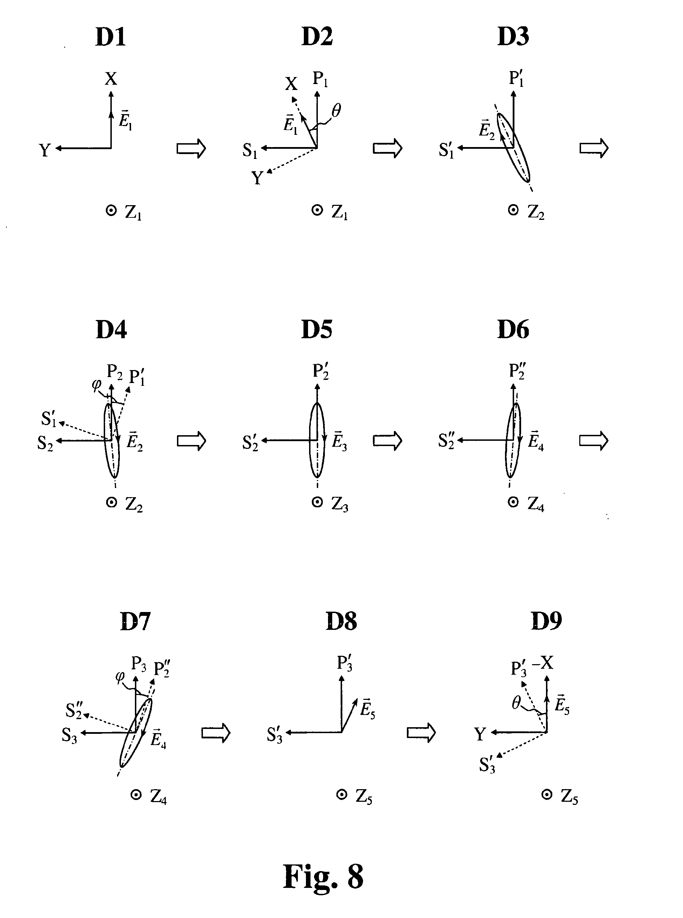

Fig.8 illustrates a variation of the beam polarization state during the propagation of the beam through the proposed retroreflector. There are beam polarizations: D1, D2 - before the retroreflector, D3, D4 - after the first reflection, D5 - after the second reflection, D6, D7 - after the third reflection, D8, D9 - after the fourth reflection. In the positions D1 and D9 a polarization vector is presented in the coordinate systems associated with the reference plane **g,** i.e. in the laboratory coordinate systems associated with the nonlinear crystal. In the positions D2-D8 the polarization vector or the ellipse is presented in the local coordinate systems associated with the reflection planes of the retroreflector. The direction of the observation in all the cases is the direction of the beam propagation.

The initial light beam polarization is linear and its vector $E_1$ has a direction X in the plane **g** (position D1). Whereas the first prism (6) of the retroreflector is turned in respect to the laboratory coordinate system, the polarization direction vector $E_1$ forms an angle Θ with an axis $p$ ($P_1$) of the prism (6) (position D2). At the moment of the total internal reflection, $s$ and $p$ polarization components experience different phase shifts, what results in changing the polarization state to an elliptical after the first reflection (position D3). The long axis of the polarization ellipse $E_2$ is inclined in respect to the axes $P_1$ and $S_1$. In the coordinate systems associated with the second prism (7) the axes of the polarization ellipse $E_2$ form a different angle with the coordinate axes $P_2$ and $S_2$, as a result, during the second reflection, the length of $s$ and $p$ polarization components differ from the one obtained during the first reflection. After the second reflection (position D5), $s$ and $p$ polarization components again experience a different phase shift, therefore the size and the orientation of the polarization ellipse change again. In the retroreflector with 4 reflections (depicted on Fig.1, Fig.3, Fig.5 and Fig.7), after the second reflection, the axes of the polarization ellipse $E_3$ coincide with the axes $P_2$ and $S_2$, that is the phase difference between the polarization components $s$ and $p$ is $\Delta\varphi=\pi/2$. The components $s$ and $p$ are the same during the second and the third reflections and polarization components experience the same phase shift. As a result in position D6 the axis of the polarization ellipse $E_4$ rotates to the direction, which is symmetric to the polarization direction in the position D4. The dimensions of the ellipse $E_4$ and the ellipse $E_2$ are the same. Before the fourth reflection (position D7) in the coordinate system, associated with the first prism (6), the polarization ellipse $E_4$ forms an angle with the axis $P_3$, which is equal to the ellipse inclination angle at the position D3 just symmetrically opposite. During the fourth reflection, the components $s$ and $p$ do not coincide with the components $s$ and $p$ of the second and the third reflections, but they coincide with the components $s$ and $p$ of the first reflection. After the fourth reflection, in the position D8, the polarization again becomes linear. The resulted direction of the beam's polarization vector $E_5$ makes an angle $\Theta$ with the axis $P_3$, this means that after four reflections the total phase difference between the polarization components $s$ and $p$ is $\Delta\varphi=\pi$. The polarization vector $E_5$ coincides with the axis [-X ] of the laboratory coordinate system. Consequently, the polarization vector $E_5$ is anti-parallel to the initial vector $E_1$, and their phases differ by $\pi$. Although the linear polarization is not retained inside the retroreflector, but the polarization is again linear after the retroreflector and its orientation coincides with the initial orientation though its phase is different. The proposed retroreflector in the OPG resonator performs the same operation of rotating the beam's profile and preserving the direction of the polarization as do two elements of the prior art (a Porro prism at 45° angle and $\lambda/2$ phase retardation plate).

Fig.7 and Fig.8 present the case, where $\Theta$ = +26°, and $\varphi$ = -19°. Such set of angles is calculated for the retroreflector, which has the refraction index n = 1.455 (fused quartz at 710 nm). Another set of angles, where $\Theta$ = -26° and $\varphi$ = +19°, is possible for the same refraction index value, just the orientation of the axes of the polarization ellipse and the rotation direction of the polarization vector are changed. The polarization is right, when $\Theta$ is positive and the polarization is left, when $\Theta$ is negative (the rotation direction of the polarization vector does not vary during the transit through the retroreflector).

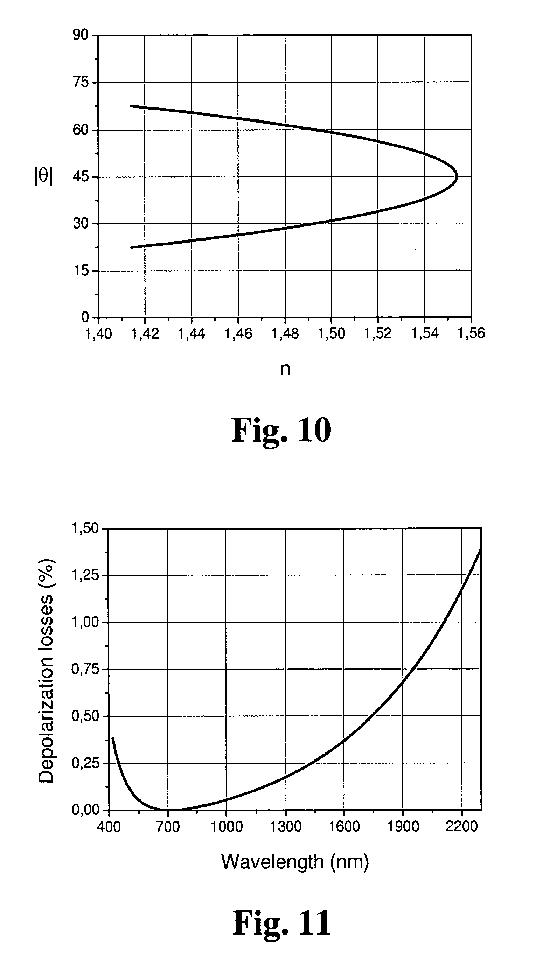

There are several solution sets for {$\Theta$; $\varphi$} for each refraction index value (in a certain range 1.41...1.554), which satisfies the condition for the profile (the interchange of the vertical and the horizontal axes) and the condition for the polarization (the preservation of the polarization direction). The range of solutions for the angle $\Theta$ for different indexes of refraction is illustrated in Fig.10. Modulus notation means that the prism may be rotated both clockwise and counter-clockwise. The angle $\varphi$ can be found from:

$$\begin{cases} \Theta - \varphi = +45°; \ +135°; \ +225°; ..., \ when \ \Theta > 0; \\ \Theta - \varphi = -45°; \ -135°; \ -225°; ..., \ when \ \Theta < 0; \end{cases} \qquad (2)$$

Note: the condition (2) is narrower than the condition (1). The objectives of this invention can be fulfilled in quite a wide range of refraction index values.

As discussed above, the retroreflector of this invention allows to retain the unchangeable linear polarization for the fixed refraction index, when the two perpendicular axes of the beam profile are interchanged. In the OPG, which is a tunable radiation source, it is necessary to maintain the polarization steady in the entire tuning range.

One of the possibilities to achieve this is by changing the turning angles of the prisms for different wavelengths, but that is inconvenient and the stability of the OPG operation could suffer.

Another possibility is to optimize the geometry of the retroreflector for a single central wavelength and keep the angle stable, while tuning for the wavelength. The retroreflector will not operate perfectly for the entire tuning range, i.e. the linear polarization will not be warranted and some tangential polarization components resulting in an elliptical polarization will appear. One can say that the polarization purity of the beam gets degraded. As a result, this means that the polarization losses in the OPG resonator evolve as the amplification in the nonlinear crystal is polarization-sensitive. In order to evaluate those 'depolarization losses', we calculate the ratio of the two orthogonal polarization components $|E_H|^2/|E_V|^2 \cdot 100\%$.

When for the retroreflector prism we use a material with a low refraction index dispersion, the depolarization losses of the OPG resonator are low, and they are smaller compared to the OPG resonator made from a combination of a Porro prism as the retroreflector and the phase retardation plate. The calculated depolarization losses as a function of a generated wavelength are presented in Fig.11. This curve illustrates the 'depolarization losses' for the retroreflector made from a fused quartz and optimized for 710 nm wavelength ($|\Theta|$ = 26°, $|\varphi|$ = 19°), which ensures the depolarization losses less than 1.5% in the wavelength range from 400 nm to 2300 nm (the parametric generation range of the OPG using a nonlinear crystal BBO and pumped by 355nm laser). The polarization purity better than 1% is ensured up to 2100 nm. The range of low losses range is controlled simply by changing the geometry of the retroreflector.

Both the signal and the idler waves of the proposed OPG is characterized by both a high beam quality and pure linear polarization in the whole tuning range.

When using the type II nonlinear crystal in the OPG, the signal and the idler waves are of mutually orthogonal polarizations (e.g. the signal wave is of vertical, the idler wave is of horizontal polarization). It is very convenient to use the polarizer for the separation of the signal and the idler waves, because the polarization of both waves is perfectly stable, despite of the rotation of the beam profile in the resonator. This is especially relevant in the case of the collinear parametric interaction, because the signal and the idler waves propagate in the same direction. When operating in the vicinity of the degeneration point, i.e. the wavelengths of the signal and the idler waves are very close or equal (709 - 711 nm, when the OPG is pumped by 355nm), then the use of the polarizer is the only way to achieve the separation for the wavelength components that are so close. Consequently, the proposed optical parametric generator including the multifunctional retroreflector and a polarizer for the separation of the signal and idler waves ensures wavelength tuning without a break in the tuning curve (near the degeneration point).

The foregoing description of the preferred embodiments of the present invention has been provided for the purpose of illustration and description. It is not intended to be exhaustive or to limit the invention to the precise form disclosed. Obviously, many modifications and variations will be apparent to the practitioners skilled in the art. The embodiments were chosen and described in order to best explain the principles of the invention and its practical applications, thereby enabling others skilled in the art to understand the invention for various embodiments and with various modifications as are suited to the particular use contemplated. It is intended that the scope of the invention be defined by the following claims and their equivalents.

**Claims**

1. An optical parametric generator comprising an optical resonator formed by two end mirrors (1, 2) and a nonlinear crystal (3) located on a resonator optical axis between said two end mirrors, a means for directing a pump beam into the resonator and a means for directing a signal and an idler beam out from the resonator, one of the end mirrors of the resonator is a retroreflector (2), **characterized in that** the retroreflector (2) comprises two total internal reflection prisms (6, 7) of an optically transparent material, wherein the first prism (6) is placed on the resonator optical axis and forms the first total internal reflection plane (b), which changes propagation direction of the signal and the idler beams from a first beam path (4), coinciding with said resonator optical axis, to a second beam path (5) on which the second prism (7) is located, which is a Porro prism, and forms the second and the third total internal reflection planes (e, f), wherein

   the first prism (6) is rotated about the first beam path (4) at an angle $\theta$, where the angle $\theta$ is an angle between the polarization vector ($\vec{E}_1$) of the signal and the idler beams incident to the first total internal reflection plane (b) and the plane comprising first and second beam paths (4, 5),

   the second prism (7) is rotated about the second beam path (5) at an angle $\varphi$, where the angle $\varphi$ is an angle between the apex of the second prism (7) and the direction perpendicular to the plane comprising first and second beam paths (4, 5), wherein

   the values of the angles $\theta$ and $\varphi$ depend on a refractive index of the transparent material of which the retroreflector (2) is made, and are set so that after the last reflection inside the retroreflector (2) during each retroreflection the total phase difference between the perpendicular (s) and the parallel (p) polarization components of the signal and the idler beams is equal to $\pi$,

   while $\theta$ and $\varphi$ are mutually bounded to satisfy conditions:

$$\theta - \varphi = +45° + k*90°, \text{ when } \theta > 0,$$

   and

$$\theta - \varphi = -45° - k*90°, \text{ when } \theta < 0,$$

   whereas $k$ = 0, 1, 2,...

2. An optical parametric generator according to claim 1, **characterized in that** both retroreflector's prisms (6, 7) are right-angle prisms made of a transparent material having an index of refraction equal to 1.455, the angle $\theta$ is 26 degrees, while the angle $\varphi$ is 19 degrees, whereas a rotation direction of the second prism (7) is opposite to a rotation direction of the first prism (6).

3. An optical parametric generator according to claim 1, **characterized in that** the first prism (6) is not a right-angle prism.

4. An optical parametric generator according to any one of claims 1-3, **characterized in that** the retroreflector (2) comprising the first prism and the second prism is made from a single piece of transparent material.

5. An optical parametric generator according to any one of claims 1-4, **characterized in that** another end mirror of the resonator is a flat mirror (1).

6. An optical parametric generator according to any one of claims 1-4, **characterized in that** another end mirror of the resonator is an image rotating prism.

7. An optical parametric generator according to claim 6, **characterized in that** the image rotating prism is a Porro prism (14), which in combination with the retroreflector (2) rotates the beam profile by 90° angle during each full round-trip through the resonator.

**Patentansprüche**

1. Optisch parametrischer Generator umfassend einen von zwei Endspiegeln (1, 2) gebildeten optischen Resonator und einen nichtlinearen Kristall (3), der sich auf einer optischen Resonatorachse zwischen diesen zwei Endspiegeln befindet, Mittel zur Lenkung eines Pumpstrahls in den Resonator und Mittel zur Lenkung eines Signal- und eines Idlerstrahls aus dem Resonator heraus, einer der Endspiegel des Resonators ist ein Rückstrahler (2), **dadurch gekennzeichnet, dass** der Rückstrahler (2) zwei Totalreflexionsprismen (6, 7) aus einem optisch transparenten Material umfasst, wobei
das erste Prisma (6) auf der optischen Resonatorachse aufgebracht ist und die erste Totalreflexionsebene (b) bildet, die die Ausbreitungsrichtung der Signal- und Idlerstrahlen von einem ersten Strahlenweg (4), der mit der genannten optischen Resonatorachse zusammenfällt, in einen zweiten Strahlenweg (5) ändert, auf dem sich das zweite Prisma (7) befindet, welches ein Porroprisma ist und die zweiten und dritten Totalreflexionsebenen (e, f) bildet, wobei
das erste Prisma (6) um den ersten Strahlenweg (4) in einem Winkel $\theta$ drehbar ist, wobei der Winkel $\theta$ ein Winkel zwischen dem Polarisationsvektor ($\overline{E}_1$) der Signal- und Idlerstrahlen verbunden mit der ersten Totalreflexionsebene (b) und der Ebene, die die ersten und zweiten Strahlenwegs (4, 5) umfasst, ist,
das zweite Prisma (7) um den zweiten Strahlenweg (5) in einem Winkel $\varphi$ drehbar ist, wobei der Winkel $\varphi$ ein Winkel zwischen dem Scheitelpunkt des zweiten Prismas (7) und der Richtung senkrecht zur Ebene, die die ersten und zweiten Strahlenwege (4, 5) umfasst, ist, wobei
die Werte der Winkel $\theta$ und $\varphi$ von einem Brechungsindex des transparenten Materials abhängen, aus dem der Rückstrahler (2) besteht und so gelagert sind, dass nach der letzten Reflexion innerhalb des Rückstrahlers (2) bei jeder Retroreflexion der gesamte Phasenunterschied zwischen den senkrechten (s) und den parallelen (p) Polarisationskomponenten der Signal- und Idlerstrahlen gleich $\pi$ ist,
während $\theta$ und $\varphi$ sich gegenseitig begrenzen, um folgende Bedingungen zu erfüllen:

$$\theta - \varphi = +45° + k*90°, \text{ wenn } \theta > 0,$$

und

$$\theta - \varphi = -45° - k*90°, \text{ wenn } \theta < 0,$$

wohingegen $k$ = 0, 1, 2,...

2. Optisch parametrischer Generator nach Anspruch 1, **dadurch gekennzeichnet, dass** beide Prismen (6, 7) des Rückstrahlers Rechtwinkelprismen aus transparentem Material sind und einen Brechungsindex von 1.455 haben, der Winkel $\theta$ 26 Grad beträgt, während der Winkel $\varphi$ 19 Grad beträgt, während eine Drehrichtung des zweiten Prismas (7) entgegengesetzt der Drehrichtung des ersten Prismas (6) ist.

3. Optisch parametrischer Generator nach Anspruch 1, **dadurch gekennzeichnet, dass** das erste Prisma (6) kein Rechtwinkelprisma ist.

4. Optisch parametrischer Generator nach einem der Ansprüche 1 bis 3, **dadurch gekennzeichnet, dass** der Rückstrahler (2), der das erste Prisma und das zweite Prisma umfasst, aus einem einstückigen transparenten Material hergestellt ist.

5. Optisch parametrischer Generator nach einem der Ansprüche 1 bis 4, **dadurch gekennzeichnet, dass** ein weiterer Endspiegel des Resonators ein Planspiegel (1) ist.

6.  Optisch parametrischer Generator nach einem der Ansprüche 1 bis 4,
    **dadurch gekennzeichnet, dass** ein weiterer Endspiegel des Resonators ein Bilddrehprisma ist.

7.  Optisch parametrischer Generator nach Anspruch 6, **dadurch genkennzeichnet, dass** das Bilddrehprisma ein
    Porroprisma (14) ist, das in Kombination mit dem Rückstrahler (2) das Strahlprofil um einen 90°-Winkel bei jedem
    vollständigen Umlauf durch den Resonator dreht.

**Revendications**

1.  Générateur paramétrique optique comprenant un résonateur optique formé par deux miroirs d'extrémité (1, 2) et
    un cristal non linéaire (3) situé sur un axe du résonateur optique entre lesdits deux miroirs d'extrémité, un moyen
    pour diriger un faisceau de pompage dans le résonateur et un moyen pour diriger un signal et un faisceau complémentaire sortant du résonateur, l'un des miroirs d'extrémité du résonateur est un rétroréflecteur (2), **caractérisé en
    ce que** le rétroréflecteur (2) comprend deux prismes à réflexion interne totale (6, 7) faits d'un matériau optiquement
    transparent, dans lequel
    le premier prisme (6) est placé sur l'axe optique du résonateur et forme le premier plan de réflexion interne totale
    (b) qui modifie la direction de propagation du signal et les faisceaux complémentaire allant d'un premier trajet de
    faisceau (4), coïncidant avec ledit axe du résonateur optique, à un second trajet de faisceau (5) sur lequel est situé
    le second prisme (7) qui est un prisme de Porro, et forme le deuxième et le troisième plan de réflexion interne totale
    (e, f), dans lequel
    on fait tourner le premier prisme (6) autour du premier trajet de faisceau (4) d'un angle θ, où l'angle θ est l'angle
    compris entre le vecteur de polarisation ($\bar{E}_1$) du signal et les faisceaux complémentaire incidents sur le premier plan
    à réflexion interne totale (b) et le plan comprenant les premier et second trajets de faisceau (4, 5),
    on fait tourner le second prisme (7) autour du second trajet de faisceau (5) d'un angle φ, où l'angle φ est l'angle
    compris entre le sommet du second prisme (7) et la direction perpendiculaire au plan comprenant les premier et
    second trajets de faisceau (4, 5), dans lequel
    les valeurs des angles θ et φ dépendent de l'indice de réfraction du matériau transparent dont est constitué le
    rétroréflecteur (2) et sont réglés de telle sorte qu'après la dernière réflexion à l'intérieur du rétroréflecteur (2) pendant
    chaque rétroréflexion, la différence de phase totale entre les composantes de polarisation perpendiculaire (s) et
    parallèle (p) du signal et du faisceau complémentaire est égale à π,
    θ et φ étant mutuellement liés de manière à satisfaire aux conditions suivantes :

    $$\theta - \varphi = +45° + k*90°, \text{ lorsque } \theta > 0,$$

    et

    $$\theta - \varphi = -45° - k*90°, \text{ lorsque } \theta < 0,$$

    avec k = 0, 1, 2, ...

2.  Générateur paramétrique optique selon la revendication 1, **caractérisé en ce que** les deux prismes du rétroréflecteur
    (6, 7) sont des prismes à angle droit faits d'un matériau transparent ayant un indice de réfraction égal à 1,455,
    l'angle θ est égal à 26°, l'angle φ étant égal à 19°, tandis que le sens de rotation du second prisme (7) est opposé
    au sens de rotation du premier prisme (6).

3.  Générateur paramétrique optique selon la revendication 1, **caractérisé en ce que** le premier prisme (6) n'est pas
    un prisme à angle droit.

4.  Générateur paramétrique optique selon l'une quelconque des revendications 1 à 3, **caractérisé en ce que** le
    rétroréflecteur (2) comprenant le premier prisme et le second prisme est fait d'un unique morceau de matériau
    transparent.

5.  Générateur paramétrique optique selon l'une quelconque des revendications 1 à 4, **caractérisé en ce qu'**un autre miroir d'extrémité du résonateur est un miroir plat (1).

6. Générateur paramétrique optique selon l'une quelconque des revendications 1 à 4, **caractérisé en ce qu'**un autre miroir d'extrémité du résonateur est un prisme de rotation d'image.

7. Générateur paramétrique optique selon la revendication 6, **caractérisé en ce que** le prisme de rotation d'image est un prisme de Porro (14) qui, en combinaison avec le rétroréflecteur (2), fait tourner le profil de faisceau d'un angle de 90° durant chaque aller et retour complet à travers le résonateur.

**Fig. 1**

**Fig. 2**

**Fig. 3**

**Fig. 4**

**Fig. 5**

**Fig. 6**

**Fig. 7**

**Fig. 8**

$$\begin{cases} E_{P1} = \cos\theta \, ; \\ E_{S1} = \sin\theta \, . \end{cases}$$

$$\begin{cases} E_{P2} = E_{P1'} \cdot \cos\varphi + E_{S1'} \cdot \sin\varphi \, ; \\ E_{S2} = -E_{P1'} \cdot \sin\varphi + E_{S1'} \cdot \cos\varphi \, . \end{cases}$$

$$\begin{cases} E_{P3} = E_{P2''} \cdot \cos\varphi + E_{S2''} \cdot \sin\varphi \, ; \\ E_{S3} = -E_{P2''} \cdot \sin\varphi + E_{S2''} \cdot \cos\varphi \, . \end{cases}$$

$$\begin{cases} E_{-X} = E_{P3'} \cdot \cos\theta - E_{S3'} \cdot \sin\theta \, ; \\ E_{Y} = E_{P3'} \cdot \sin\theta + E_{S3'} \cdot \cos\theta \, . \end{cases}$$

# Fig. 9

16

**Fig. 10**

**Fig. 11**

**EP 2 075 629 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1662623 A
- US 6647033 B